# EUROPÄISCHE PATENTSCHRIFT

(11) **EP 2 033 753 B1**
(45) Veröffentlichungstag und Bekanntmachung des Hinweises auf die Patenterteilung: **19.06.2013**
(21) Anmeldenummer: 08011827.6
(22) Anmeldetag: 01.07.2008
(51) Int. Cl.: B29B 9/16, B29B 13/04, C08G 63/80, C08G 63/88, B29B 9/06

(54) **Verfahren und Vorrichtung zur Herstellung eines Polyestergranulats nach dem Latentwärmekristallisationsverfahren**
Method and apparatus for producing a metallic polyester granulate according to the latent heat crystallisation method
Procédé et dispositif de fabrication d'un granulé de polyester selon le procédé de cristallisation à chaud latente

(30) Priorität: 07.09.2007 DE 102007042636
(43) Veröffentlichungstag der Anmeldung: 11.03.2009
(73) Patentinhaber: Lurgi Zimmer GmbH, 60295 Frankfurt am Main (DE)
(72) Erfinder: Otto, Brigitta, Dr., 14715 Milow (DE); Kirsten, Klaus, 55130 Mainz (DE); Bachmann, Holger, 64331 Weiterstadt (DE); Müller, Bernd, 63636 Brachttal (DE)
(74) Vertreter: Meyer-Dulheuer, Karl-Hermann

(56) Entgegenhaltungen:
- EP-A2- 1 522 395
- WO-A1-2008/071278
- DE-A1-102004 050 356

## Beschreibung

Die Erfindung betrifft die Herstellung von Polymergranulat, insbesondere aus Polyestern wie Polyethylenterephthalat (PET) und Copolyestern. Die Kristallisation der Polymeren findet dabei unter Nutzung der Eigenwärme aus dem Schmelzezustand des Polymeren statt, was auch als Latentwärmekristallisation bezeichnet wird. Des Weiteren geht es um die Möglichkeit, die Temperatur des Granulats in einer sich an die Granulierung anschließenden Kühleinrichtung bei Bedarf zu steuern, um damit nachfolgende temperaturabhängige Prozesse kontrollieren zu können. Dadurch sollen unter Anderem Wartungs- oder Störfälle besser abgefangen bzw. die damit im Zusammenhang stehenden Risiken und Kosten reduziert werden.

### Stand der Technik:

Es ist bereits bekannt, aromatische Polyester oder Copolyester, insbesondere Polyethylenterephthalat und dessen Copolymere nach einer Schmelzepolykondensation zu Granulaten zu verarbeiten.

Die Verwendung von Unterwassergranulationssystemen zu diesem Zweck, ist ebenfalls Stand der Technik. Dabei tritt die etwa 280°C heiße Polymerschmelze strangförmig durch Lochdüsen in einen von Wasser durchspülten Raum und wird mittels Klingen in Portionen zertrennt, welche sich im Wasser aufgrund der Oberflächenspannung zu annähernd kugelförmigem Granulat formen und verfestigen. Das Granulat wird anschließend durch die Kühlflüssigkeit aus dem Granulator ausgetragen und über eine Leitung bzw. eine Kühlstrecke zu einem Wasserabscheider transportiert, wo die Granulat-Wasser-Mischung getrennt wird.

Ein großer Nachteil der Unterwassergranulation wie auch anderer Granulationsverfahren war bis vor einiger Zeit, dass sich aufgrund der schnellen und weitgehenden Abkühlung bis zum Verlassen des Trockners ein amorpher Zustand im Granulat einstellt.

Ein Problem, welches sich aus diesem amorphen Zustand bei PET-Granulat ergibt, ist dessen Neigung zum Verkleben oder Verklumpen während bestimmter Verarbeitungsschritte, beispielsweise in einer nachfolgenden Festphasenpolykondensation (Solid State Polycondensation, SSP). Diese ist bei kristallinem Granulat markant geringer. Die Weiterverarbeitung des Granulats muss außerdem in im Wesentlichen trockenem Zustand erfolgen. Auch deshalb ist eine kristalline oder zumindest teilkristalline Struktur des Granulats gewünscht, da auf diese Weise eine problemlose Trocknung ermöglicht wird.

Es ist also zwecks Umwandlung des amorphen Granulats in einen kristallinen Zustand eine sehr energieaufwendige Wärmebehandlung notwendig, was aufwendige Heiz- und Mischeinrichtungen voraussetzt. Dabei muss das Granulat für eine Trocknung oder eine Weiterbearbeitung in einer Festphasenpolykondensation nicht 100% kristallin sein - ein Kristallisationsgrad von 30-40% reicht prinzipiell aus.

In den letzten Jahren wurde mit der in DE 10 2004 015 515 A1 beschriebenen Latentwärmekristallisation ein Weg gefunden, diese Schwierigkeit zu überwinden, wobei die Bezeichnung 'Latentwärmekristallisation' für eine Kristallisation unter Nutzung der Eigenwärme aus dem Schmelzezustand des Polymeren steht.

Dabei geht es um die Verkürzung der Verweilzeit des Granulats im Kühlmittel in der Verfahrensphase zwischen Granulierung und Nachbehandlung, z.B. Trocknung. Dies bedeutet, dass das Polymer zwischen Granulation und Kristallisation keine starke Abkühlung erfährt. Auf diese Weise verbleibt genug Wärme im Granulat für die genannte selbstständige Kristallisation, gespeist durch die Eigenwärme aus dem Schmelzezustand des Polymers. Letzteres bleibt also über die Granulation bis und mit Kristallisation heiß, was zur Folge hat, dass ihm, dem Polymer, nach der Granulation zwecks Kristallisation im Wesentlichen keine Energie mehr von außen zugeführt werden muss. Mit dieser Methode werden durchaus Kristallisationsgrade von über 30% erreicht.

Das Latentwärmekristallisationsverfahren ist beispielsweise geeignet zur Herstellung von Granulaten aromatischer Polyester oder Copolyester mit bestimmtem Kristallisationsgrad, erhältlich aus einer oder mehreren Dicarbonsäuren bzw. deren Methylestern, wie beispielsweise Terephthalsäure, Isophthalsäure, Naphthalindicarbonsäure, 4,4-Bisphenyldicarbonsäure und/oder Dimethylterephthalat und einem oder mehrerer Diole, wie Ethylenglykol, Neopentylglykol und/oder Diethylenglykol. Diese Ausgangsverbindungen können in an sich bekannter Weise nach dem kontinuierlichen oder diskontinuierlichem Verfahren der Ver- oder Umesterung unter Verwendung von bekannten Katalysatoren mit einer sich anschließenden Polykondensation unter Vakuum zu einer hochviskosen Polyesterschmelze verarbeitet und anschließend nach einem modifizierten Granulationsverfahren granuliert werden um dann zu kristallisieren.

In WO 2005/051623 wird ein Latentwärmekristallisationsverfahren beschrieben, bei dem die Verweildauer der Pellets im Kühlmittel durch das Einblasen eines Gases in die Kühlflüssigkeit reduziert wird. Das Gas durchströmt dabei die Kühlflüssigkeit in Transportrichtung mit hoher Geschwindigkeit. Beim Einblasen von Luft und der Verwendung von Wasser als Kühlflüssigkeit entsteht ein Dampfnebel mit einer Gaskomponente von ca. 98%, was einerseits zu einer Reduktion des Kontakts zwischen Granulat und flüssigem Kühlwasser und andererseits zu einer Steigerung der Transportgeschwindigkeit führt. Das Granulat behält so bis zum Austritt aus dem Trockner genügend Wärme für eine Latentwärmekristallisation. Wie ebenfalls erwähnt wird, kann der zu starken Abkühlung des Granulats im Kühlstrom auch durch Erhöhung der Kühlmitteltemperatur, Änderung der Rohrdurchmesser und Verkürzung der Distanz zwischen Granuliervorrichtung und Trockner entgegengewirkt werden.

Ein weiteres Beispiel eines Latentwärmekristallisationsverfahrens wird in AT 410 942 dargelegt. In der darin beschriebenen Vorrichtung soll die Granulattemperatur bis zur Kristallisation möglichst hoch d.h. knapp unterhalb der Schmelztemperatur des Polymers verbleiben, was ebenfalls durch eine mit Flüssigkeit gefüllte Granulat-Schneidekammer erreicht wird. Das Granulat wird dabei unmittelbar nach dessen Herstellung vom Kühlmedium getrennt, um möglichst viel Restwärme im Granulat zu bewahren. Die Temperatur des Kühlmediums wird zum genannten Zweck reguliert, da wie bei allen Latentwärmekristallisationsverfahren das Kühlwasser im Kreislauf nach Kontakt mit dem Granulat wieder auf die Prozesstemperatur gebracht werden muss.

Die Temperatur des Kühlmittels ist für die aus dem Granulat abgeführte Wärme entscheidend. Wichtig ist jedoch beispielsweise auch die Korngröße des Granulats und somit das Verhältnis der Kornoberfläche zum Kornvolumen und damit zur Kornmaße. Des Weiteren ist der Wärmeentzug von der Polymerzusammensetzung, dem Wärmeleitkoeffizienten des Kühlmittels und natürlich von der Verweildauer des Polymers im Kühlmittel abhängig.

Die bei Verfahren unter Verwendung der Latentwärmekristallisation genutzten Kühlstrecken sind auf eine möglichst kurze Kontaktzeit zwischen Granulat und Kühlmittel, d.h. einen möglichst kurzen Kühlweg und eine hohe Transportgeschwindigkeit ausgelegt, was bei den Vorrichtungen nach dem Stand der Technik apparativ festgelegt und während des Prozesses nicht bzw. kaum veränderbar ist.

Daraus ergeben sich jedoch beispielsweise für den Fall, dass der Kühlvorrichtung nachgeschaltete Anlagen abgeschaltet werden müssen oder ausfallen, gravierende Probleme: Eine Anlage zur Festphasendealdehydisierung (DAH) ist z.B. fest mit der Polymerproduktionsanlage verbunden. Es besteht deshalb keine Möglichkeit, bei Abschaltung der DAH-Anlage die Produktionsanlage über einen längeren Zeitraum hinweg weiterzubetreiben. Ist eine solche Anlage auf Latentwärmekristallisation ausgelegt, wäre, selbst wenn man das Granulat nach der Kühlstrecke ausschleusen würde, dessen Temperatur noch zu hoch für eine Lagerung. Die Körner könnten im Auffangbehälter verkleben und aufgrund der hohen Temperatur wäre u.a. mit einer oxidativen Schädigung des Polymers an der Luft zu rechnen. Die hohe Granulattemperatur verursacht außerdem Probleme beim Abfüllen des Produkts in die üblichen Polyethylen-Säcke ("Big Bags"), deren Gewebe bereits bei einer Temperatur des einzufüllenden Materials von etwa 70°C beginnt, weich zu werden, was zum Stabilitätsverlust führt.

Diese Schwierigkeiten ergeben sich, wie erwähnt, deshalb, weil Verfahren zur Polymerproduktion unter Nutzung der Latentwärmekristallisation vorrichtungsbedingt in der Kühlstrecke zwischen Granulator und Trockner keine starke Abkühlung des Produkts zulassen, da sie im Gegenteil apparativ auf eine möglichst geringe Abkühlung ausgelegt sind.

Wenn also in obigem Beispiel im Havariefall die DAH-Anlage ausfällt, muss die Polykondensationsanlage ohne Vorbereitungszeit abgeschaltet werden. Das Produkt verbleibt folglich in den Reaktoren und zersetzt sich dort. Dies führt nicht nur zum Verlust des im Reaktor verbleibenden Polymers, sondern hat auch zur Folge, dass beim Wiederanfahren der Reaktoren bedeutende Mengen an minderwertigem Produkt entstehen, was je nach Anlagengröße beachtliche finanzielle Einbußen zur Folge hat.

Während also beim herkömmlichen Verfahren ohne Latentwärmekristallisation das Granulat im Kühlstrom stark abgekühlt wird, was anschließend eine energieintensive Erhitzung zwecks Kristallisation notwendig macht, ist das Produkt nach Durchlaufen der Kühleinrichtung prinzipiell zur Lagerung geeignet. Umgekehrt vermeidet eine Latentwärmekristallisation die sehr energieaufwändige Wärmebehandlung, bietet aber nicht die Möglichkeit zur Ausschleusung des Produkts, weil das Granulat nach Durchlaufen der Kühlstrecke noch zu heiß ist. Beide Verfahren sind konstruktionstechnisch weitgehend fixiert und lassen kaum eine Steuerung der Granulattemperatur zu.

DE 10 2004 050 356 A1 offenbart ein Verfahren gemäß dem Oberbegriff des Anspruchs 1 sowie eine Vorrichtung gemäß dem Oberbegriff des Anspruchs 9.

### Aufgabenstellung:

Der Erfindung liegt die Aufgabe zugrunde, mittels Latenzwärmekristallisation Granulate aus Polyestern herzustellen, aber gleichzeitig den Prozess bezüglich der Temperatur des Granulats in einem weiten Bereich flexibel bzw. steuerbar zu halten. So können der Granulierung und insbesondere der Latentwärmekristallisation nachgeschaltete, temperaturabhängige Prozesse besser kontrolliert, und unter Anderem Wartungs- oder Störfälle besser abgefangen bzw. die damit im Zusammenhang stehenden Risiken und Kosten reduziert werden.

Die Aufgabe wird erfindungsgemäß gelöst durch ein Verfahren zur Herstellung eines Polyester- und/oder Copolyestergranulats nach dem Latentwärmekristallisationsverfahren, gemäß dem kennzeilchnenden Teil des Anspruchs 1 und einer Vorrichtung gemäß dem kennzeichnenden Teil des Anspruchs 9.

Wenn hier davon die Rede ist, dass ein Parameter, beispielsweise die Temperatur, steuerbar, variierbar, anpassbar oder einstellbar ist bzw. gesteuert, varriert, angepasst oder eingestellt wird bzw. werden kann, so bedeutet dies, dass diese Parameter nicht apparativ in engen Grenzen festgelegt sind bzw. nicht nur durch konstruktive Anpassungen an der Vorrichtung geändert werden können.

Bevorzugt ist ein Verfahren zur Herstellung eines Polyester- und/oder Copolyestergranulats nach dem Latentwärmekristallisationsverfahren, wobei die Temperatur des Granulats nach Bedarf gesteuert werden kann, wobei es bevorzugt ist, dass in dem noch heißen Granulat auf diese Weise die Kristallbildung im Bedarfsfall durch Abkühlung unterbrochen werden kann und ein im Wesentlichen amorphes Granulat entsteht.

Dies bietet den Vorteil, das Granulat bei Störfällen auf eine Temperatur kühlen zu können, die eine Zwischenlagerung erlaubt. So kann der Prozess weiterlaufen und es wird vermieden, dass Polymer in den Reaktoren verbleibt und sich dort zersetzt.

In einer weiteren bevorzugten Ausgestaltung wird die Granulattemperatur bei Bedarf über das Einstellen der Kontaktdauer des Granulats mit dem Kühlmittel gesteuert, wobei das Granulat über einen längeren Kühlweg geleitet und/oder die Transportgeschwindigkeit des Granulats in der Kühleinrichtung vermindert wird.

Als Kühlweg wird der apparativ bedingte Weg bezeichnet, auf dem das Granulat in Kontakt mit Kühlmittel gelangt, was auch als Kühleinrichtung bezeichnet werden kann. Dies beinhaltet eine von Kühlmittel durchströmte Schneidekammer im Granulator und den nachfolgenden Weg bis zur Abscheidung des Kühlmittels bzw. zur Ausschleusung des Granulats aus dem Prozess.

Alternative oder ergänzende, zuschaltbare Kühlwege sind konstruktiv besonders einfach und deshalb preiswert zu realisieren und bestehen in ihrer einfachsten Form aus Rohren. Außerdem sind solch einfache Maßnahmen auch wenig störanfällig.

Bevorzugt wird die Kontaktdauer des Granulats mit dem Kühlmittel so eingestellt, dass das Granulat beim Austritt aus dem Kühlmittel mindestens noch eine zur Einleitung der Kristallisation ausreichende Wärmemenge aufweist oder die Kontaktdauer wird bei Bedarf so eingestellt, dass das Granulat spätestens bei Austritt aus dem Kühlmittel eine für die schadlose Lagerung ausreichend geringe Wärmemenge aufweist.

Insbesondere wenn eine vorzeitige Ausschleusung des Granulats zwecks Lagerung vorgesehen ist, ist eine Ausgestaltung vorteilhaft, bei der eine Abkühlung des Granulats auf eine Temperatur von vorzugsweise unter 160°C, bevorzugt unter 80°C, vorzugsweise 0 °C bis 160 °C, bevorzugt 5 °C bis 120 °C, besonders bevorzugt 10 °C bis 80 °C erfolgen kann, wobei dies bevorzugt unter Einwirkung eines Kühlmittels stattfindet.

Bei kristallinem PET erfolgt unterhalb von ca. 160°C keine, oder nur noch eine geringe thermooxidative Schädigung, was eine aus chemischer Sicht schadlose Lagerung prinzipiell ermöglicht. Je nachdem, welche zusätzliche Kühlung das Granulat noch in einer allenfalls zwischen Kühlstrecke und Lagereinrichtung geschalteten Trocknungseinrichtung oder anderer Einrichtungen erfährt, kann also eine Temperatur beim Verlassen der Kühleinrichtung von 160°C ausreichend tief sein. Im Allgemeinen sind jedoch niedrigere Temperaturen vorzuziehen, da es bei amorphem PET noch zu einer Temperaturerhöhung durch Kristallisation kommen kann. Das Granulat sollte folglich beim Eintritt in eine Lagereinrichtung eine Temperatur aufweisen, bei der es auch bei einer möglichen teilweisen Kristallisation nicht zu einem Anstieg der Produkttemperatur über 160°C kommt. Wird das Granulat unter die Glasüberganstemperatur abgekühlt, welche bei PET je nach Rezeptur im Bereich von 70-80°C liegt, kann eine Kristallisation und eine damit einhergehende autogene Temperaturerhöhung ganz ausgeschlossen werden. Für das Abpacken des Granulats sind ebenfalls niedrigere Temperaturen von vorzugsweise unter 60°C vorteilhaft.

In einer weiteren bevorzugten Ausgestaltung wird die Temperatur des Granulats nach Bedarf über das Einstellen der Granulatkorngröße gesteuert, vorzugsweise mittels einer Anpassung der Schnittfrequenz in der Granuliervorrichtung. Die Schnittfrequenz ist als Oberbegriff für mehrere variierbare Prozess- bzw. Vorrichtungsparameter zu verstehen. Sie hängt beispielsweise von der Anzahl der Messer am Rotor, der Drehzahl desselben und auch von der Anzahl extrudierter Polymerstränge ab. Wobei die Anzahl extrudierter Polymerstränge bei konstanter Gesamtmenge an extrudiertem Polymer pro Zeiteinheit gemeint ist. All diese Parameter beeinflussen die Granulatkorngröße, d.h. die Masse eines Granulatkorns.

Die Korngröße des Granulats, d.h. das Verhältnis der Kornoberfläche zum Kornvolumen, hat eine Auswirkung auf die Abkühlgeschwindigkeit desselben im Kühlmittel. Durch die bedarfsgesteuerte Variation dieser Größe wird eine Kontrolle der aus dem Granulat abgeführten Wärmemenge nach Durchlaufen der Kühlstrecke ermöglicht. Der Vorteil ist hierbei, dass im einfachsten Fall eine bereits vorhandene Vorrichtung, nämlich der Granulator selbst, verwendet werden kann, um beispielsweise über die Anpassung der Schnittfrequenz diesen Effekt zu erreichen, was Kostenvorteile bringt und den regelbaren Bereich der resultierenden Produkttemperatur erheblich vergrößert .

Ein bevorzugter Wert für die Korngröße bzw. das Korngewicht bei der Polymer-Granulatherstellung liegt im Bereich von 12- 40 mg pro Korn. Da die Korngröße jedoch als Mittel zur Kontrolle der Wärmeabfuhr eingesetzt wird, bewegt sie sich in einer Bandbreite zwischen 8 mg pro Korn und 50 mg pro Korn, vorzugsweise 10 bis 30 mg pro Korn, besonders bevorzugt 12 bis 18 mg pro Korn. Jedoch sind, wenn eine schnelle und vollständige Abkühlung angestrebt wird, auch kleinere Kornmassen möglich. Ab einem Wert von über 20 - 30 mg pro Korn sinkt die Reaktionsgeschwindigkeit der Granulatkörner in nachgeschalteten SSP oder DAH Anlagen signifikant.

Bevorzugt ist es außerdem, das für eine Lagerung ausreichend abgekühlte Granulat, welches vorzugsweise eine Temperatur im Bereich von unter 160°C besonders bevorzugt von weniger als 80°C aufweist und von amorpher oder teilkristalliner Struktur sein kann, nach Durchlaufen der Kühleinrichtung auszuschleusen, um es anschließend zwischenzulagern, wobei das Granulat bevorzugt unmittelbar nach Austritt aus dem Kühlmittel oder der Trocknungseinrichtung in eine Lagereinrichtung geführt wird, wobei dies bevorzugt erst nach Abscheidung des Kühlmittels geschieht.

Eine bevorzugte Ausgestaltung beinhaltet des Weiteren, dass das ausgeschleuste Granulat dem Prozess wieder zugeführt wird, vorzugsweise in kleinem Anteil, wobei dessen Temperatur bevorzugt auf 130°C bis 220 °C, besonders bevorzugt 150 °C bis 200°C, eingestellt wird.

Dies deshalb, weil das vorgängig ausgeschleuste Produkt beim erneuten Zuführen zum Prozess, vorzugsweise dieselbe Temperatur aufweisen sollte wie der Hauptstrom.

Natürlich kann das zwischengelagerte Granulat auch, statt wieder dem Prozess zugegeben und mit dem zu diesem Zeitpunkt gerade produzierten Granulat den Einrichtungen, in denen die Latentwärmekristallisation stattfindet, zugeführt zu werden, einem anderen Prozess, beispielsweise einer alternativen Kristallisation in heißem Gas oder mit Hilfe eines Flüssigkeitsbades, unterworfen werden. In diesem Fall ist eine vorgängige Erhitzung des Granulats gegebenenfalls nicht notwendig.

Ferner ist ein Verfahren zur Herstellung eines Polyester- oder Copolyestergranulats nach dem Latentwärmekristallisationsverfahren bevorzugt, wobei in dem noch heißen Granulat die Kristallbildung im Bedarfsfall durch Abkühlung unterbrochen werden kann und ein amorphes Granulat entsteht, das anschließend, gegebenenfalls nach erneuter Wärmezufuhr, in Granulatkörner mit einem Kristallisationsgrad von vorzugsweise mindestens 38% und/oder einem Acetaldehydgehalt von vorzugsweise 0,5 bis 100 ppm und/oder einer Schmelzenthalpie von bevorzugt unter 50kJ/kg umgewandelt wird, welches in seiner äußersten Schicht vorzugsweise kleinere, mit einem Lichtmikroskop im Polarisationskontrast sichtbare Mikrostruktureinheiten aufweist als im Zentrum des Granulatkorns.

Verlässt das Granulat zwecks Latentwärmekristallisation die Kühleinrichtung in heißem Zustand, ist es bevorzugt, dass die Körner eine Temperatur von mindestens 100°C, bevorzugt mindestens 115°C, besonders bevorzugt mindestens 130°C aufweisen. Vorzugsweise liegt die Temperatur in diesem Fall bei 130°C bis 250°C, bevorzugt 150°C bis 220°C.

Dadurch wird gewährleistet, dass das Granulat nach der Kühlung noch ausreichend Energie für die Einleitung der Kristallisation aufweist. Außerdem erleichtern hohe Temperaturen, d.h. eine nach der Kühlung möglichst große im Granulat verbleibende Wärmemenge, zusammen mit der sich während der Kristallisation entwickelnden Wärme die Weiterverarbeitung des Granulats in nachfolgenden Prozessschritten wie der Behandlung in einer DAH-Anlage oder einer SSP, da die Notwendigkeit einer Energiezufuhr zwecks Anhebung der Granulattemperatur auf die für die genannten Prozessschritte notwendigen Temperaturen nicht oder in geringerem Umfang auftritt.

In einer bevorzugten Ausgestaltung wird das Granulat also im Normalbetrieb, d.h. wenn sich der Kühlung des heißen Granulats eine Latentwärmekristallisation anschließt, in der Kühleinrichtung vorzugsweise auf nicht unter 100°C °C, bevorzugt nicht unter 115°C, besonders bevorzugt nicht unter 130°C abgekühlt. Die Latentwärmekristallisation wird bevorzugt durchgeführt, bis im Granulat ein Kristallisationsgrad von mindestens 38%, bevorzugt 38 bis 60%, besonders bevorzugt 42 bis 55% und/oder ein Acetaldehydgehalt zwischen 0,5 und 100 ppm und/oder eine Schmelzenthalpie ("heat of fusion", HOF) unter 60 kJ/kg, bevorzugt unter 50kJ/kg erreicht ist.

Ein solcher Kristallisationsgrad verleiht dem Granulat einerseits Festigkeit, vermeidet zu große Feuchtigkeitsaufnahme während der Lagerung und des Transports und gewährleistet durch eine moderate Schmelzenthalpie, dass sich die zur weiteren Bearbeitung des Granulats aufzuwendende Energie in Grenzen hält. Das Granulat weist in seiner äußersten Schicht vorzugsweise kleinere, mit einem Lichtmikroskop im Polarisationskontrast sichtbare, Mikrostruktureinheiten auf als im Zentrum des Granulatkorns.

Als der Latentwärmekristallisation nachfolgende Verarbeitungsschritte kommen alle Verfahren in Betracht, in denen Polyestergranulate eingesetzt werden. Dies können neben einer Festphasenpolykondensation (SSP) beispielsweise auch Verfahren sein, die hauptsächlich zur Entaldehydisierung von Polyestergranulat mit einer bereits ausreichend hohen intrinsischen Viskosität (I.V.) dienen (Festphasendealdehydisierung, DAH) oder auch Verformungsverfahren, in denen beispielsweise Vorformlinge für die Herstellung von Lebensmittelverpackungen, sogenannte Preforms, direkt aus dem Granulat hergestellt werden. Im letztgenannten Verfahren muss das Granulat bereits direkt nach der Latentwärmekristallisation die für die Verformung notwendige I.V. und den geforderten Acetaldehydgehalt aufweisen.

Dieses Granulat kann vorzugsweise entweder
a) ohne vorherige Additivierung und ohne weitere Abkühlung direkt in einen Festphasenpolykondensationsreaktor gefördert und auf eine höhere Viskosität aufkondensiert und entaldehydisiert werden oder
b) ohne vorherige Additivierung das Granulat einer Dealdehydisierung zugeführt und anschließend der Verarbeitung zu Hohlkörpern zugeführt werden oder
c) direkt in der Vorformlingsherstellung zur Herstellung von Hohlkörpern eingesetzt werden, wobei vor und/oder nach dem Polykondensationsreaktor Additive, zum Beispiel Thermostabilisatoren und/oder Acetaldehydreduzierende Additive zugemischt werden.

Es ist bekannt, dass sich latentwärmekristallisierte Granulate für alle genannten Weiterverarbeitungsverfahren besonders gut eignen, wenn die an einem Lichtmikroskop im Polarisationskontrast sichtbaren Mikrostruktureinheiten, sogenannte Sphärolite, im Randbereich, d. h. der äußersten Schicht der Teilchen deutlich kleiner sind als in der Probenmitte, d. h. dem Zentrum der Teilchen. Die Sphärolithe in der Probenmitte haben meist einen maximalen Durchmesser von 20 [mu]m, oftmals deutlich weniger. Latentwärmekristallisierte Granulate für alle genannten Weiterverarbeitungsverfahren eignen sich ebenfalls gut, wenn im Randbereich der Kristallisationsgrad gleich groß oder sogar niedriger als in der Probenmitte ist. Es ist deshalb auch für die vorliegende Erfindung vorteilhaft, solche Granulate herzustellen.

Die oben genannte Aufgabe wird auch erfindungsgemäß gelöst durch eine Vorrichtung zur Herstellung eines Polyester- und/oder Copolyestergranulats nach dem Latentwärmekristallisationsverfahren umfassend eine Granuliervorrichtung, eine Kühleinrichtung und eine Trocknungseinrichtung, wobei die Temperatur des Granulats nach Bedarf in der Kühleinrichtung, vorzugsweise über die Variierung der Kontaktdauer des Granulats mit dem Kühlmittel und/oder durch Einstellung der Kühlmittelzusammensetzung gesteuert werden kann und/oder diese über die Einstellung der Korngröße des Granulats mittels der Granuliervorrichtung steuerbar ist.

Die Temperatur des Granulats ist durch eine solche Vorrichtung vorzugsweise über die Kontaktdauer des Granulats mit dem Kühlmittel, so einstellbar, dass ein bei Austritt aus dem Kühlmittel mindestens noch ausreichend Wärme für eine Latentwärmekristallisation aufweisendes Granulat, vorzugsweise von einer Temperatur von mindestens 100°C und ein bei Austritt aus dem Kühlmittel eine für die schadlose Lagerung ausreichend geringe Wärmemenge aufweisendes Granulat, vorzugsweise mit einer Temperatur von weniger als 80°C und/oder ein im Wesentlichen amorphes Granulat herstellbar ist.

Vorteilhaft ist eine Vorrichtung zur Herstellung eines Polyester- und/oder Copolyestergranulats nach dem Latentwärmekristallisationsverfahren, die eine Granuliervorrichtung, eine Kühleinrichtung und einen Trockner umfasst, wobei die Kontaktdauer des Kühlmittels mit dem Granulat bei Bedarf so einstellbar ist, dass Letzteres auf eine Temperatur von 0°C bis 160°C, vorzugsweise von 5°C bis 120 °C, besonders bevorzugt von 10°C bis 80°C abgekühlt wird.

Bei der Kühleinrichtung handelt es sich vorzugsweise um einen von einem Kühlmittel durchströmten Raum, der bevorzugt Leitungen und/oder Behälter aufweist.

Vorzugsweise sind in der Anlage Vorrichtungen zur Variation der Kontaktzeit des Granulats mit dem Kühlmittel vorgesehen. Dem Fachmann sind diverse Möglichkeiten, dies zu bewerkstelligen, bekannt.

Vorteilhaft ist beispielsweise eine Vorrichtung, die sich dadurch auszeichnet, dass die Kontaktzeit des Granulats mit dem Kühlmittel durch die Veränderung, vorzugsweise Verlängerung, des Kühlwegs steuerbar ist.

Die Verlängerung des Kühlwegs bedeutet eine Verlängerung der durch das Granulat im Kühlmittel zurückgelegten Strecke. Dies kann durch eine Verlängerung d.h. Ergänzung des vorhandenen, für den Normalbetrieb vorgesehenen Kühlwegs, oder einen oder mehrere alternative, d.h. den ersten Kühlweg ersetzende Kühlwege geschehen, die im Bedarfsfall zuschaltbar sind.

So kann der Kühlweg im Normalbetrieb aus einer Leitung bestimmter Länge bestehen, wobei ein oder mehrere alternative oder ergänzende Kühlwege bei Bedarf zuschaltbar sind. Diese bestehen beispielsweise aus Leitungen und/oder Behältern, welche eine größere Länge als der ursprüngliche Kühlweg bzw. andere Dimensionen aufweisen. Es besteht die Möglichkeit, die Kühlwege unterschiedlich auszugestalten, z.B. in Bezug auf die Form und/oder den Durchmesser. Werden ein oder mehrere Behälter in den Kühlwegen verwendet, kann in ihm eine Steuerung der Verweilzeit des Granulats durch Variierung der Produkthöhe erfolgen. Der Einsatz von Rohren und Behältern ist besonders deshalb vorteilhaft, weil diese preiswert und kaum störungsanfällig sind.

Eine vorteilhafte Ausgestaltung besteht also in einer Vorrichtung, in der die bei Normalbetrieb kurze Verweilzeit des Granulats im Kühlmittel, bei Bedarf, beispielsweise durch Zuschalten des oder der alternativen oder ergänzenden Kühlwege, angehoben werden kann. Die notwendigen Verweilzeiten sind jedoch auch von anderen Parametern abhängig, wie z.B. der Korngröße des Granulats, dem verwendeten Kühlmittel etc. Der Fachmann ist problemlos in der Lage diese Parameter durch Versuche so aufeinander abzustimmen, dass die oben genannten Granulattemperaturen für eine Latentwärmekristallisation bzw. für eine Ausschleusung und schadlose Lagerung erreicht werden können.

Eine Variierung der Verweilzeit kann in geringerem Umfang auch durch die Anpassung der Pumpleistung beispielsweise durch Regelung der Pumpendrehzahl oder ein der Pumpe im Kühlmittelkreislauf nachgeschaltetes Ventil erfolgen, was den Vorteil hat, den Wärmegehalt des aus dem Kühlmittel austretenden Granulats in einem engen Bereich steuern und gegebenenfalls bereits vorhandene Einrichtungen nutzen zu können.

Deshalb besteht eine weitere vorteilhafte Ausgestaltung der Vorrichtung darin, dass die Pumpleistung in Bezug auf den Kühlmittelkreislauf einstellbar ist.

In einer weiteren bevorzugten Ausgestaltung ist die Granulatkorngröße vorzugsweise über die Schnittfrequenz in der Granuliervorrichtung steuerbar. Bei der Granuliervorrichtung handelt es sich bevorzugt um eine Unterwasser-Granuliervorrichtung, wobei auch andere Kühlmittel als Wasser eingesetzt werden können. Besonders vorteilhaft sind auch Unterwassergranulatoren, welche bei Überdruck betrieben werden, was eine Kühlwassertemperatur von über 100°C ermöglicht. Ebenfalls geeignet sind Stranggranulatoren, beispielsweise unter Einsatz von heißem Wasser.

Ferner ist es vorteilhaft, alternativ oder ergänzend zur Anpassung der Verweilzeit und/oder der Korngröße, die Granulattemperatur über die Kühlmitteltemperatur und/oder -zusammensetzung zu steuern.

Beim Kühlmittel handelt es sich vorzugsweise um Wasser, das mit Zusätzen versehen sein kann. Es kommen jedoch auch andere Fluide in Frage. Allgemein kann es sich beim Kühlmittel um Flüssigkeiten, Flüssigkeitsgemische (einschließlich Azeotrope), Flüssigkeits-Gas-Gemische und Gase handeln, wobei unter "Gas" auch Gasgemische verstanden werden können. Vorzugsweise sind dies Luft oder Inertgase wie Stickstoff und Helium. In Frage kommen des Weiteren unter anderem Alkohole, Polyole bzw. Glykole.

Über die Zusammensetzung des Kühlmediums kann die Wärmekapazität desselben beeinflusst werden und damit dessen Kühlleistung. Die dazu einsetzbaren Flüssigkeiten die beispielsweise einem Wassserkühlstrom zugegeben werden können, sind vorzugsweise nicht brand- oder explosionsgefährlich, preiswert, leicht zurückzugewinnen, verfügbar und chemisch reaktionsträge, d.h. vorzugsweise mischen sie sich weder mit dem Polymer, noch reagieren sie mit ihm. Einsetzbar sind, wie oben genannt, beispielsweise höhere Alkohole wie Glykol.

Es kann auch vorteilhaft sein, wenn ein flüssiges Kühlmittel einen höheren Siedepunkt als Wasser aufweist, wie dies beispielsweise bei einer Wasser-Glykol-Mischung der Fall ist. Dies erlaubt höhere Kühlmitteltemperaturen ohne Phasenübergang. Die Siedetemperatur des Kühlmittels kann jedoch auch durch Druckveränderungen in der Kühleinrichtung beeinflusst werden, was die Auslegung der Kühleinrichtung als Druckkammer bedingt.

Des Weiteren kann die Einleitung eines Gases in Transportrichtung des Granulats auch zu einer erhöhten Transportgeschwindigkeit des Granulats in der Kühleinrichtung beitragen.

Neben der Kühlmittelzusammensetzung, kann die Kühlmitteltemperatur zur Steuerung der Granulattemperatur eingesetzt werden. Es ist also eine Vorrichtung vorteilhaft, bei welcher die Kühlmitteltemperatur in einem Bereich von 20°C bis 180°C, bevorzugt 30°C bis 100°C einstellbar sind.

Eine Kühlmitteltemperatur von etwa 30°C ist mit dem üblichen Kühlwasser aus Kühltürmen problemlos erreichbar. Natürlich ist auch eine tiefere Absenkung der Kühlmitteltemperatur möglich, jedoch teurer. Bei einer Kühlmitteltemperatur von über 100°C, die zwecks Vermeidung einer zu starken Abkühlung des Granulats im Normalbetrieb durchaus wünschenswert sein kann, muss bei der Verwendung von Wasser als Kühlmittel unter Überdruck gearbeitet werden, was eine besondere - und damit teurere - Ausgestaltung der Anlage voraussetzt.

Die Anpassung der Temperatur des Kühlmittels kann beispielsweise durch einen zuschaltbaren Kühl- oder Heizkreislauf und/oder eine zusätzliche Kühl- oder Heizmittelversorgung geschehen, beispielsweise durch das Einleiten einer Flüssigkeit einer bestimmten Temperatur in das Kühlmittel und außerdem durch Wärmetauscher oder andere aus dem Stand der Technik bekannte Mittel.

Die vorgenannten Möglichkeiten der Temperaturkontrolle des Granulats können selbstverständlich auch frei kombiniert werden, d.h. beispielsweise dass sowohl Maßnahmen zur Verlängerung der Kontaktzeit zwischen Granulat und Kühlmittel als auch Möglichkeiten zur Anpassung der Kühlmitteltemperatur bzw. - zusammensetzung und/oder zur Veränderung der Korngröße in Kombination einsetzbar sind.

Entscheidend ist die Möglichkeit, mittels Latentwärmekristallisation Granulate aus Polyestern herzustellen, aber gleichzeitig den Prozess bezüglich der Temperatur des Granulats in einem weiten Bereich flexibel bzw. steuerbar zu halten.

Beim in der Vorrichtung vorhandenen Trockner handelt es sich bevorzugt um einen Zentrifugaltrockner, wobei auch andere Trocknungseinrichtungen eingesetzt werden können.

Zentrifugaltrockner haben den Vorteil, dass bei der Zentrifugation vorhandene Überstände auf der Granulatoberfläche abgeschlagen werden und das Granulat so eine gleichmäßigere Form annimmt, was das Fliessverhalten desselben positiv beeinflusst.

Bevorzugt ist es außerdem, dass die Vorrichtung Leitungen zur Ausschleusung des Granulats beinhaltet, welche vorzugsweise nach der Kühlstrecke und/oder der Trocknungseinrichtung angebracht sind, und mit mindestens einer weiteren Einrichtung, vorzugsweise einer Lagereinrichtung, verbunden sind. Es ist sowohl eine kontinuierliche als auch eine diskontinuierliche, gegebenenfalls zwischen mehreren Lagereinrichtungen wechselnde Beschickung möglich.

Es kann jedoch auch ein alternativer Kühlweg direkt in die Lagereinrichtung münden und gegebenenfalls Einrichtungen zur Kühlmittelabscheidung aufweisen, wie beispielsweise ein Sieb und/oder einen Trockner.

Eine Ausschleusung kann mittels einer Weiche in der Produktleitung unter der Trocknungseinrichtung, bei welcher es sich vorzugsweise um eine Zentrifuge handelt, erfolgen. Auf diese Weise fällt beim Umschalten vom Normalbetrieb, also wenn sich der Kühlung des heißen Granulats eine Latentwärmekristallisation anschließen soll, auf das Ausschleusen am wenigsten Übergansmaterial an. Außerdem besteht bei einer erhabenen Anordnung des Trockners, beispielsweise an einer hoch gelegenen Stelle im Produktionsgebäude, die Möglichkeit, das ausgeschleuste Produkt unter Ausnutzung der Gravitation, beispielsweise mittels einer schrägen Rohrleitung, in ein Silo zu führen.

Eine bevorzugte Ausgestaltung umfasst des Weiteren, dass die Vorrichtung Einrichtungen beinhalten, welche es erlauben, das ausgeschleuste Granulat dem Prozess wieder zuzuführen, vorzugsweise in kleinem Anteil, und die Temperatur vorzugsweise auf 130 °C bis 220 °C, besonders bevorzugt 150 °C bis 200°C, einzustellen. Für eine solche Aufgabe besonders geeignet sind Apparate, welche eine intensive Vermischung bieten und einen guten Wärmetransport erlauben und so eine schnelle Erwärmung ermöglichen, wie beispielsweise Wirbelbett- oder Pulsbett-Trockner. Außerdem transportieren die relativ großen Gasmengen, die in diesen Apparaturen bewegt werden, leicht große Mengen an Wärme zum Granulat.

Die nachstehende Erläuterung der Erfindung in Form von Zeichnungen soll nicht als Beschränkung der Erfindung auf die gezeigten Ausführungsformen interpretiert werden.

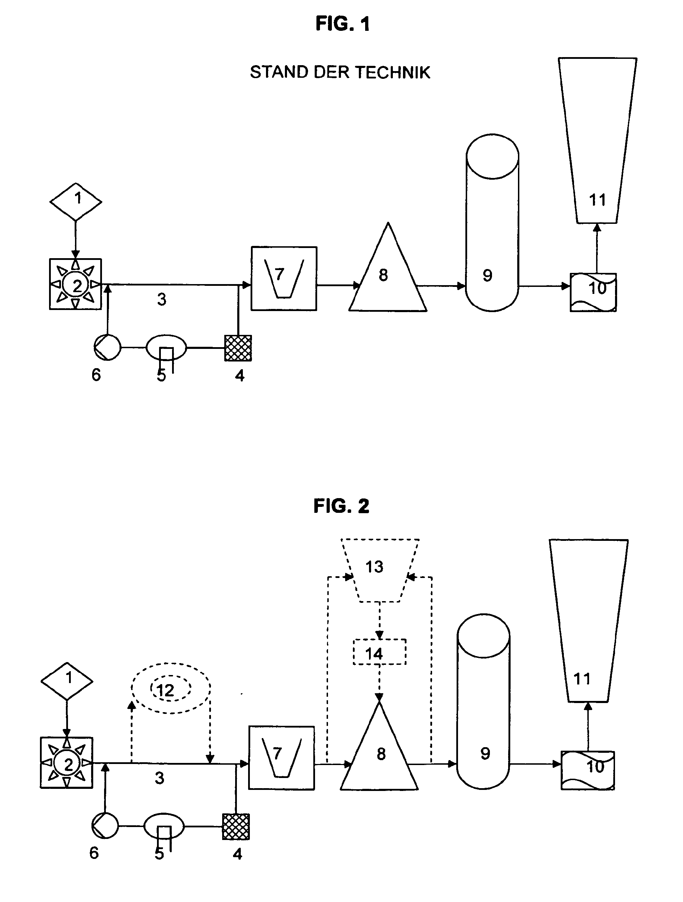

- FIG. 1: zeigt schematisch eine Vorrichtung bzw. ein Verfahren zur La- tentwärmekristallisation nach dem Stand der Technik. Das Polyes- termaterial (1), z.B. PET, wird dabei in eine Granuliervorrichtung (2), beispielsweise eine Unterwassergranulator, geführt, wo es durch Lochdüsen strangförmig in einen von Kühlmittel durchström- ten bzw. besprühten Raum austritt, der Teil einer Kühleinrichtung (3) ist. Bei Austritt wird es mittels Klingen in Portionen zertrennt, welche sich im Wasser aufgrund der Oberflächenspannung zu an- nähernd kugelförmigem Granulat formen und sich teilweise verfes- tigen. Das Granulat durchläuft die Kühleinrichtung (3), und gelangt zu einer Kühlmittel-Abscheidevorrichtung (7), beispielsweise ei- nem Trockner, wo die Granulat-Wasser-Mischung getrennt wird. Das Kühlmittel wird im Kreislauf durch einen Filter (4) und eine Temperiervorrichtung (5) geleitet, wobei letztere die Aufgabe hat, die Temperatur des Kühlmittels nach dem Kontakt mit dem heißen Granulat wieder auf den Sollwert einzustellen. Der Kühlmittelkreis- lauf wird von einer Pumpe (6) aufrechterhalten. Das Granulat wird nach der Trocknung in einen Kristallisator (8) bzw. eine Wärmebehandlungseinrichtung geleitet, wo es unter Nutzung der verbliebenen Eigenwärme kristallisiert, um anschlie- ßend in einem Behandlungstum (9), beispielsweise einem DAH- Turm, weiterbehandelt und nach Durchlaufen eines Granulatküh- lers (10) schließlich in eine Lagervorrichtung (11) z.B. ein Silo ge- führt zu werden.
- FIG. 2: zeigt eine erfindungsgemäße Vorrichtung bzw. ein erfindungsge- mäßes Verfahren, welche zusätzlich zu den in FIG. 1 erwähnten Elementen eine Vorrichtung (12) zur Variierung der Kontaktzeit des Kühlmittels mit dem Granulat aufweist. Des Weiteren wird die Ausschleusung des Granulats nach Durchlaufen des Trockners (7) in eine Lagervorrichtung (13) und die Rückführung des zwischen- gelagerten Granulats in den Kristallisator (8) dargestellt, wobei des Granulat vor der Zuführung in den Kristallisator (8) in einer Er- wärmungsvorrichtung (14) auf die notwendige Temperatur ge- bracht wird.

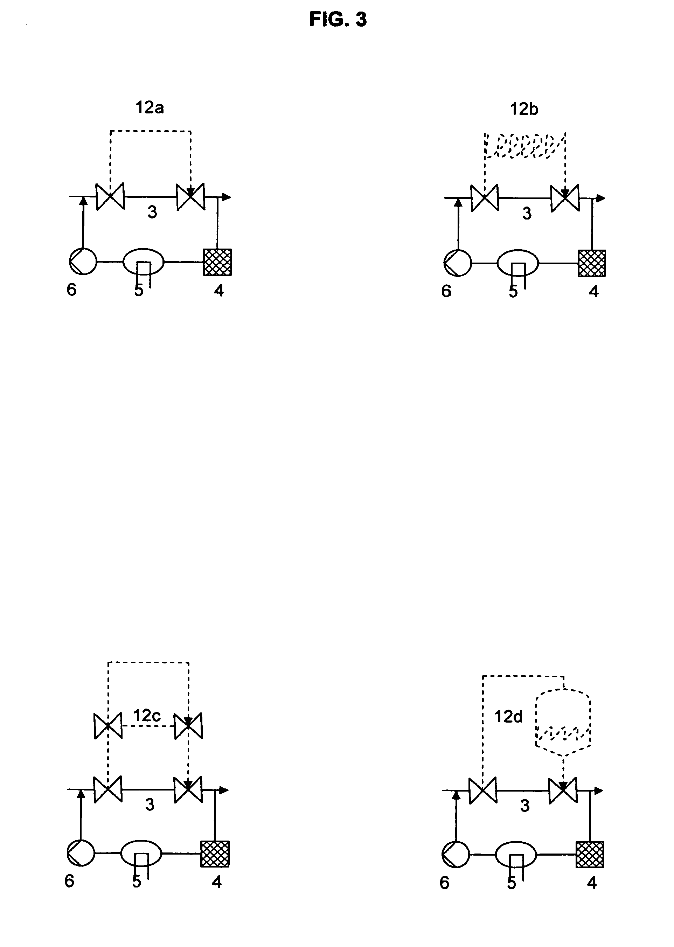

- FIG. 3: zeigt verschiedene Ausgestaltungsmöglichkeiten der Vorrichtung (12) zur Variierung der Kontaktzeit zwischen Kühlmittel und Gra- nulat in Form alternativer Kühlwege. Ein solch alternativer Kühl- weg kann als einfache, mittels Ventilen zuschaltbare Leitung (12a) ausgebildet sein, wobei die Leitung bezüglich Form und Dimensi- onierung ganz unterschiedlich ausgestaltet sein kann. Deshalb ist beispielhaft eine gewundene Leitung (12b), z.B: in Helixform, ge- zeigt. Das dritte Beispiel zeigt mit Ventilen verbundene Leitungen zur stufenweisen Regulierung (12c) der Länge des Kühlwegs. Schließlich kann ein alternativer Kühlweg (12d) neben einer Lei- tung auch einen Behälter aufweisen, in dem die Verweilzeit des Granulats über die Steuerung der Produkthöhe eingestellt werden kann. Die Fig. 3 zeigt jeweils nur einen Ausschnitt aus dem Ge- samtprozess, beginnend bei der Granulationsvorrichtung (2) und endend bei der Kühlmittel Abscheidevorrichtung (7) bzw. der Zent- rifuge.

Die Erfindung soll nachfolgend anhand einiger Ausführungsbeispiele erläutert werden, wobei die Erfindung sich natürlich nicht auf die darin genannten Ausführungsformen beschränkt.

### Beispiele:

Alle Beispiele wurden mit Kugel- bis Linsenförmigem Granulat durchgeführt. Das dabei verwendete Polymer war ein marktübliches Produkt für die Herstellung von Nahrungsmittelverpackungen und enthielt 2% Isophthalsäure und 1.4% Diethylenglykol als Comonomere.

Die Messung der Intrinsischen Viskosität (I.V.) erfolgte mittels eines Kapillarviskosimeters nach Ubbelohde mit einer Kapillare der Größe 1 c bei 25°C. Es wurde einer Lösung von 500 mg Polyester in 100 ml eines Gemisches aus Phenol und 1,2-Dichlorbenzol im Verhältnis 3:2 (Gewichtsteile) verwendet.

Die Granulattemperatur wurde mit Hilfe eines eingesteckten Temperaturfühlers mit Schutzhülse gemessen, wie er üblicherweise in der chemischen Verfahrenstechnik Anwendung findet. Beim für die Messung der Oberflächentemperatur des vorbeifließenden Granulats eingesetzten Fühler handelt es sich um ein Standard-Gerät mit der Bezeichnung PT100.

Zu allfälligen weiteren Messmethoden sei auf die Angaben in DE 10 2004 015 515 verwiesen.

In den Beispielen 1 bis 5 wurde das zuvor getrocknete Polymer mittels eines Einschneckenextruders aufgeschmolzen, in einer geeigneten Apparatur (*HVSR*, wie beschrieben in EP 0 320 586 B1) unter Vakuum bis zu Viskositäten von 0.70 dl/g bzw. 0.84 dl/g polykondensiert, und dann dem Granulator zugeführt. Im Beispiel 6 wurde das Einsatzmaterial gemäß Beispiel 1 behandelt, jedoch mit dem Unterschied, dass die Zuführung zum Granulator direkt nach dem Einschneckenextruder erfolgte, also ohne weitere Viskositätserhöhung.

Die Polymerschmelzen wurden kontinuierlich in einem herkömmlichen Unterwassergranulator vom Typ AH 2000 der Firma BKG Chips granuliert.

Vom Granulator wurde das Gemisch aus Wasser und verfestigtem Polymer zu einer Zentrifuge geleitet, wobei die Länge der Leitung und die Geschwindigkeit des fördernden Wassers während der Versuche variiert wurden.

Nach Abscheiden des Wassers fiel das Granulat in einen Behälter (="Kristallisator"), bei dem mittels Füllstandsmessung und drehzahlgeregelter Zellradschleuse am Austritt, ein konstantes Niveau geregelt wurde welches einer statistischen Verweilzeit des Produktes von ca. 30 Minuten entspricht. Am Produkteintritt (nach dem Trockner), auf halber Höhe (entspricht 15 Minuten Verweilzeit) und am Austritt des Behälters (entspricht 30 Minuten Verweilzeit) wurde jeweils die Granulattemperatur gemessen. Mit diesen Messstellen konnte die Produkttemperatur direkt nach dem Trockner, wie auch die Temperaturerhöhung durch die Latentwärmekristallisation beobachtet werden.

### Beispiel 1

Hier wurde das Polymer direkt, also auf kürzestem in der Versuchsapparatur realisierbarem Weg, von der Schneideinrichtung zum Trockner geführt. Nach dem Trocknen des Granulates gelangte es in einem ungerührten Behälter ("Kristallisator")

### Beispiel 2

Hier wurde die Kühlstrecke aus Beispiel 1 um ein Rohrleitungsstück erweitert. Der restliche Versuchsaufbau blieb unverändert. Auch hier führte die frei werdende Kristallisationswärme zu einer Temperaturerhöhung des Granulats, die aber unter den Werten aus Beispiel 1 lag.

### Beispiel 3

Hierbei wurde die Kühlstrecke gegenüber Beispiel 2 durch ein weiteres Rohrleitungsstück erheblich verlängert. Bei der damit realisierten Kontaktzeit zwischen Kühlmedium und Granulat wurde das Produkt soweit abgekühlt, dass im Kristallisator keine signifikante Temperaturerhöhung mehr festgestellt werden konnte. Das Material behielt seine amorphe Struktur, eine sichtbare oder über die Wärmeentwicklung messbare Kristallisation setzte nicht ein.

### Beispiel 4

Mit dem Versuchsaufbau aus Beispiel 1 wurde die Pumpleistung der Kühlmittelpumpe durch eine eingebaute Blende reduziert, und damit die Verweilzeit des Granulats/Wassers in der Rohrleitung zwischen Granulator und Trockner verlängert. Die Kontaktzeit zwischen Produkt und Wasser erreichte in etwa den gleichen Wert wie im Beispiel 2, und auch die resultierenden Produkttemperaturen waren dem Beispiel 2 sehr ähnlich.

### Beispiel 5

Mit dem Versuchsaufbau aus Beispiel 1 wurde hier die Drehzahl der Granuliereinrichtung erhöht, und damit die Korngröße des Granulats verringert. Die Verringerung der Korngröße führt zu verstärkter Wärmabfuhr in der Kühlstrecke und damit zu einer verringerten Produkttemperatur im Kristallisator

### Beispiel 6

Wiederholung des Beispiel 1, jedoch unter Verwendung eines Polymers mit niedrigerer Viskosität. Das Produkt verhielt sich ebenso wie das hochviskose Polymer.

**Tabelle 1**

| Beispiel | 1 | 2 | 3 | 4 | 5 | 6 |
|---|---|---|---|---|---|---|
| Viskosität des Polymers | 0,81dl/g | 0,78 dl/g | 0,80 dl/g | 0,81 dl/g | 0,81 dl/g | 0,61 dl/g |
| Temperatur. der Polymerschmelze °C | 285 °C | 283°C | 285°C | 285°C | 284°C | 285°C |
| Wassertemperatur im Granaulator | 87 °C | 88°C | 88°C | 90°C | 90°C | 90°C |
| Verweilzeit im Wasser | 0,6 s | 3 s | 40 s | 3 s | 0,6 s | 0,6 s |
| Granulatgewicht | 18 mg | 18 mg | 18 mg | 18 mg | 16 mg | 18 mg |
| Granulattemperatur Nach Trockner | 155°C | 125°C | 90 °C | 128°C | 143°C | 153°C |
| Granulattemperatur 15 Minuten nach Trockner | 182°C | 151°C | 95 °C | 158°C | 165°C | 181°C |
| Granulattemperatur 30 Minuten nach Trockner | 180°C | 158°C | 90°C | 162°C | 166°C | 181°C |

**Bezugszeichenliste:**

| | |
|---|---|
| 1. | Polymer |
| 2. | Granuliervorrichtung |
| 3. | Kühleinrichtung, Kühlweg für Normalbetrieb |
| 4. | Filter |
| 5. | Temperierungseinrichtung zur Anpassung der Kühlmitteltemperatur |
| 6. | Pumpe, gegebenenfalls mit nachgeschaltetem Ventil |
| 7. | Kühlmittel Abscheidevorrichtung, beispielsweise Zentrifuge |
| 8. | Kristallisator |
| 9. | Behandlungsturm |
| 10. | Granulatkühler |
| 11. | Lagervorrichtung |
| 12. | Vorrichtung zur Variierung der Kontaktzeit des Granulats mit dem Kühlmittel |
| 12a. | Leitung, durch Ventile zuschaltbar |
| 12b. | Gewundene Leitung, durch Ventile zuschaltbar |
| 12c. | Mit Ventilen verbundene Leitungen zur stufenweisen Regulierung |
| 12d. | Alternativer Kühlweg aus Leitung u. Behälter, durch Ventile zuschaltbar |
| 13. | Lagervorrichtung |
| 14. | Erwärmungsvorrichtung |

## Patentansprüche

1. Verfahren zur Herstellung eines Polyester- und/oder Copolyestergranulats nach dem Latentwärmekristallisationsverfahren, **dadurch gekennzeichnet, dass** das Granulat bei Wartungs- oder Störfällen durch Einstellen der Kühlmittelzusammensetzung und/oder durch Einstellen der Korngröße des Granulats auf 5°C bis 120°C abgekühlt wird und nach Durchlaufen einer Kühleinrichtung ausgeschleust und anschließend zwischengelagert wird, wobei die Kristallbildung im noch heißen Granulat durch die Abkühlung unterbrochen wird und ein im Wesentlichen amorphes Granulat entsteht.

2. Verfahren nach Anspruch 1, **dadurch gekennzeichnet, dass** das Granulat in einer sich an die Granulierung anschließenden Kühleinrichtung durch Einstellen der Kontaktdauer des Granulats mit dem Kühlmittel abgekühlt wird.

3. Verfahren nach einem der vorangehenden Ansprüche, **dadurch gekennzeichnet, dass** das Granulat zwecks Einstellens der Kontaktdauer über einen längeren Kühlweg geleitet und/oder die Transportgeschwindigkeit des Granulats in der Kühleinrichtung vermindert wird.

4. Verfahren nach einem der vorangehenden Ansprüche, **dadurch gekennzeichnet, dass** die Steuerung der Temperatur des Granulats durch Einstellen der Kühlmitteltemperatur und/oder über das Einstellen der Korngröße des Granulats mittels einer Anpassung der Schnittfrequenz in der Granuliervorrichtung (2) erfolgt.

5. Verfahren nach einem der vorangehenden Ansprüche, **dadurch gekennzeichnet, dass** in dem noch heißen Granulat die Kristallbildung bei Bedarf durch Abkühlung unterbrochen wird und ein im Wesentlichen amorphes Granulat entsteht.

6. Verfahren nach einem der vorangehenden Ansprüche, **dadurch gekennzeichnet, dass** bei Bedarf eine Abkühlung des Granulats auf eine Temperatur von unter 160°C, bevorzugt unter 80°C, vorzugsweise 0°C bis 160°C, bevorzugt 5°C bis 120°C, besonders bevorzugt 10°C bis 80°C erfolgt und zwar bevorzugt unter Einwirkung eines Kühlmittels.

7. Verfahren nach einem der vorangehenden Ansprüche, **dadurch gekennzeichnet, dass** ein für eine Lagerung ausreichend abgekühltes Granulat, welches eine Temperatur von weniger als 120°C besonders bevorzugt von weniger als 80°C aufweist, nach Durchlaufen der Kühleinrichtung ausgeschleust und anschließend zwischengelagert wird.

8. Verfahren nach Anspruch 7, **dadurch gekennzeichnet, dass** das ausgeschleuste Granulat dem Verfahren wieder zugeführt wird, vorzugsweise in kleinem Anteil, wobei dessen Temperatur vorzugsweise auf 130°C bis 220°C, besonders bevorzugt 150°C bis 200°C, eingestellt wird.

9. Vorrichtung zur Herstellung eines Polyester- und/oder Copolyestergranulats nach dem Latentwärmekristallisationsverfahren beinhaltend eine Granuliervorrichtung (2), eine Kühleinrichtung (3) und eine Trocknungseinrichtung (7), wobei
- die Temperatur des Granulats durch Einstellung der Kühlmittelzusammensetzung und/oder durch Einstellung der Korngröße des Granulats mittels der Granuliervorrichtung (2) steuerbar ist, **dadurch gekennzeichnet,**
- **dass** die Vorrichtung eine oder mehrere Lagervorrichtungen (13) für die Lagerung des Granulats aufweist, wobei die Leitungen das Granulat vorzugsweise unmittelbar nach Austritt aus der Kühleinrichtung oder der Trocknungseinrichtung ausschleusen und in die Lagereinrichtung münden, und
- **dass** die Vorrichtung eine oder mehrere Leitungen aufweist, welche mit den Lagervorrichtungen (13) verbunden sind und das ausgeschleuste Granulat der Vorrichtung wieder zuführen, wobei zwischen der Lagervorrichtung (13) und dem Ort der Zuführung zur Vorrichtung vorzugsweise eine Einrichtung zur Erwärmung des Granulats (14) vorgesehen ist.

10. Vorrichtung nach Anspruch 9, **dadurch gekennzeichnet, dass** die Temperatur des Granulats in einer sich an die Granulierung anschließenden Kühleinrichtung (3) bei Bedarf durch Einstellung der Kontaktdauer des Granulats mit dem Kühlmittel steuerbar ist.

11. Vorrichtung nach Anspruch 9 oder 10, **dadurch gekennzeichnet, dass** die Temperatur des Granulats durch Einstellen der Kühlmitteltemperatur und/oder durch Variierung, vorzugsweise Verlängerung, des Kühlwegs steuerbar ist, wobei die Vorrichtung zu diesem Zwecke mindestens einen weiteren zuschaltbaren, ergänzenden oder alternativen, sich vorzugsweise in seiner Länge vom ersten unterscheidenden, Kühlweg (12) aufweist.

12. Vorrichtung nach einem der Ansprüche 9-11, **dadurch gekennzeichnet, dass** die Vorrichtung ein oder mehrere zuschaltbare ergänzende oder alternative Kühlwege (12a-d) aufweist, wobei diese eine oder mehrere Leitungen und/oder einen oder mehrere Behälter, in dem oder denen die Verweilzeit des Granulats im Kühlmittel einstellbar ist, aufweisen.

13. Vorrichtung nach einem der Ansprüche 9-12, **dadurch gekennzeichnet, dass** die Korngröße des Granulats bei Bedarf über die Schnittfrequenz in der Granuliervorrichtung (2) steuerbar ist.

14. Vorrichtung nach einem der Ansprüche 9-13, **dadurch gekennzeichnet, dass** die Vorrichtung eine Einstellung der Temperatur des Granulats je nach Bedarf so ermöglicht, dass ein bei Austritt aus dem Kühlmittel eine für die schadlose Lagerung ausreichend geringe Wärmemenge enthaltendes Granulat, vorzugsweise mit einer Temperatur von weniger als 120°C, besonders bevorzugt weniger als 80°C, das im Wesentlichen amorph ist, und alternativ ein bei Austritt aus dem Kühlmittel mindestens noch ausreichend Wärme für eine Latentwärmekristallisation enthaltendes Granulat, vorzugsweise von einer Temperatur von mindestens 100°C, bevorzugt mindestens 115°C, besonders bevorzugt mindestens 130°C, herstellbar ist.

15. Vorrichtung nach einem der Ansprüche 9-14, **dadurch gekennzeichnet, dass** die Vorrichtung eine oder mehrere Leitungen zur Ausschleusung des Granulats aufweist, wobei die Leitungen das Granulat vorzugsweise unmittelbar nach Austritt aus der Kühleinrichtung (3) oder der Trocknungseinrichtung (7) ausschleusen und in die Lagereinrichtung (13) münden.

## Claims

1. A process for producing a polyester and/or copolyester granulate using the latent heat crystallization process, **characterized in that** in the event of maintenance or breakdown, the granulate is cooled by adjusting the coolant composition and/or by adjusting the particle size of the granulate to 5°C to 120°C and is fed out after passing through a cooling means and then stored temporarily, whereby crystal formation in granulate which is still hot is interrupted by the cooling and an essentially amorphous granulate is produced.

2. The process as claimed in claim 1, **characterized in that** the granulate is cooled in a cooling means adjacent to the granulation by adjusting the contact period of the granulate with the coolant.

3. The process as claimed in one of the preceding claims, **characterized in that** for the purposes of adjusting the contact period, the granulate is routed over a longer cooling line and/or the conveying speed of the granulate in the cooling means is reduced.

4. The process as claimed in one of the preceding claims, **characterized in that** the temperature of the granulate is controlled by adjusting the coolant temperature and/or by adjusting the particle size of the granulate by adapting the chopping frequency in the granulation device (2).

5. The process as claimed in one of the preceding claims, **characterized in that** crystal formation in granulate which is still hot is interrupted as required by cooling and an essentially amorphous granulate is produced.

6. The process as claimed in one of the preceding claims, **characterized in that** as required, cooling of the granulate is carried out to a temperature of less than 160°C, preferably less than 80°C, preferably 0°C to 160°C, preferably 5°C to 120°C, particularly preferably 10°C to 80°C, preferably by using a coolant.

7. The process as claimed in one of the preceding claims, **characterized in that** a granulate which has been cooled sufficiently for storage, which is at a temperature of less than 120°C, particularly preferably less than 80°C, is fed out after passing through the cooling means and then is stored temporarily.

8. The process as claimed in claim 7, **characterized in that** the granulate which is fed out is fed back into the process, preferably as a small fraction, whereby its temperature is preferably adjusted to 130°C to 220°C, particularly preferably 150°C to 200°C.

9. A device for producing a polyester and/or copolyester granulate using the latent heat crystallization process, including a granulation device (2), a cooling means (3) and a drying means (7), wherein:
• the temperature of the granulate can be controlled by adjusting the coolant composition and/or by adjusting the particle size of the granulate by means of the granulation device (2), **characterized in that**
• the device comprises one or more storage means (13) for storing the granulate, wherein the pipelines feed the granulate out, preferably immediately after exiting the cooling means or the drying means, and lead into the storage means; and
• **in that** the device comprises one or more pipelines which are connected to the storage means (13) and feed the granulate which has been fed out back to the device, wherein a means for heating the granulate (14) is preferably provided between the storage means (13) and the location of the infeed into the device.

10. The device as claimed in claim 9, **characterized in that** the temperature of the granulate can be controlled in a cooling means (3) which is adjacent to the granulation as required by adjusting the contact period of the granulate with the coolant.

11. The device as claimed in claim 9 or claim 10, **characterized in that** the temperature of the granulate can be controlled by adjusting the coolant temperature and/or by varying, preferably extending, the cooling line, wherein for this purpose the device comprises at least one further connectable, supplemental or alternative cooling line (12) which preferably differs from the first in its length.

12. The device as claimed in one of claims 9 - 11, **characterized in that** the device comprises one or more connectable, supplemental or alternative cooling lines (12a-d), wherein these comprise one or more pipelines and/or one or more containers in which the residence time for the granulate in the coolant can be adjusted.

13. The device as claimed in one of claims 9 - 12, **characterized in that** the particle size of the granulate can be controlled as required by means of the chopping frequency of the granulation device (2).

14. The device as claimed in one of claims 9 - 13, **characterized in that** the device allows an adjustment of the temperature of the granulate as required such that upon exiting from the coolant, a granulate can be produced which contains a sufficiently low level of heat to be able to be stored without damage, preferably at a temperature of less than 120°C, particularly preferably less than 80°C, which is essentially amorphous, and alternatively a granulate still containing at least sufficient heat for latent heat crystallization can be produced upon exiting the coolant, preferably at a temperature of at least 100°C, preferably at least 115°C, particularly preferably at least 130°C.

15. The device as claimed in one of claims 9 - 14, **characterized in that** the device comprises one or more pipelines for feeding the granulate out, wherein the pipelines preferably feed the granulate out immediately after exiting the cooling means (3) or the drying means (7) and lead into the storage means (13).

## Revendications

1. Procédé de fabrication de granulés d'un polyester et/ou copolyester selon le procédé de cristallisation par chaleur latente, **caractérisé en ce que** lesdits granulés sont refroidis à 5 °C à 120 °C en cas de maintenance ou d'événements perturbateurs en ajustant la composition du réfrigérant et/ou en ajustant la granulométrie des granulés et qu'ils sont, après leur passage à travers un système de refroidissement, évacués puis entreposés, la formation de cristaux au sein des granulés encore chauds étant interrompue par ledit refroidissement de manière à obtenir des granulés essentiellement amorphes.

2. Procédé selon la revendication 1, **caractérisé en ce que** le refroidissement desdits granulés est réalisé dans un système de refroidissement situé en aval de la granulation, en ajustant la durée de contact entre les granulés et le réfrigérant.

3. Procédé selon l'une des revendications précédentes, **caractérisé en ce que** les granulés sont envoyés à travers un parcours de refroidissement plus long et/ou les granulés subissent une diminution de la vitesse de transport au sein dudit système de refroidissement pour ainsi ajuster ladite durée de contact.

4. Procédé selon l'une des revendications précédentes, **caractérisé en ce que** la régulation de la température des granulés est réalisée en ajustant la température du réfrigérant et/ou en ajustant la granulométrie des granulés par une adaptation de la fréquence de coupe au sein du dispositif de granulation (2).

5. Procédé selon l'une des revendications précédentes, **caractérisé en ce que**, si nécessaire, la formation de cristaux au sein des granulés encore chauds est interrompue par un refroidissement de manière à obtenir des granulés essentiellement amorphes

6. Procédé selon l'une des revendications précédentes, **caractérisé en ce que**, si nécessaire, les granulés sont refroidis à une température inférieure à 160 °C, de préférence inférieure à 80 °C, de préférence de 0 °C à 160 °C, de préférence de 5 °C à 120 °C, avec une préférence particulière de 10 °C à 80 °C, et ce préférentiellement sous l'action d'un réfrigérant.

7. Procédé selon l'une des revendications précédentes, **caractérisé en ce que**, lorsque les granulés sont suffisamment refroidis pour être stockés, leur température étant inférieure à 120 °C et avec une préférence particulière inférieure à 80 °C, ils sont évacués après un passage à travers un système de refroidissement puis entreposés.

8. Procédé selon la revendication 7, **caractérisé en ce que** les granulés évacués sont recyclés dans le procédé, de préférence dans une petite proportion, leur température étant régulée à cet effet de préférence à 130 °C à 220 °C, avec une préférence particulière à 150 °C à 200 °C.

9. Dispositif de fabrication de granulés de polyester et/ou de copolyester selon le procédé de cristallisation par chaleur latente, comportant un dispositif de granulation (2), un système de refroidissement (3) et un système de séchage (7),
- la température des granulés pouvant être régulée par le dispositif de granulation (2) en ajustant la composition du réfrigérant et/ou en ajustant la granulométrie des granulés, **caractérisé en ce que**
- le dispositif comporte un ou plusieurs dispositifs de stockage (13) destinés au stockage des granulés, les conduits assurant l'évacuation des granulés, de préférence immédiatement après que ces derniers ont quitté le système de refroidissement ou le système de séchage, et débouchant dans le système de stockage, et
- le dispositif comportant un ou plusieurs conduits qui sont reliés aux dispositifs de stockage (13) et qui recyclent les granulés évacués dans le dispositif, un système destiné au réchauffement des granulés (14) étant de préférence aménagé entre le dispositif de stockage (13) et le site de recyclage dans le dispositif.

10. Dispositif selon la revendication 9, **caractérisé en ce que** la température des granulés peut être régulée, si nécessaire, dans un système de refroidissement (3) situé en aval de la granulation en ajustant la durée de contact entre les granulés et le réfrigérant.

11. Dispositif selon la revendication 9 ou 10, **caractérisé en ce que** la température des granulés peut être régulée en ajustant la température du réfrigérant et/ou en faisant varier, préférentiellement en le prolongeant, le parcours de refroidissement, le dispositif comportant à cet effet au moins un autre parcours de refroidissement (12) complémentaire ou constituant une variante lequel peut être activé et lequel présente préférentiellement une longueur différente de celle du premier.

12. Dispositif selon l'une des revendications 9 à 11, **caractérisé en ce que** le dispositif comporte un ou plusieurs parcours de refroidissement (12a-d) complémentaires ou constituant des variantes, lesquels peuvent être activés et lesquels comportent un ou plusieurs conduits et/ou un ou plusieurs récipients au sein duquel ou desquels on peut ajuster la durée de séjour des granulés dans le réfrigérant.

13. Dispositif selon l'une des revendications 9 à 12, **caractérisé en ce que** l'on peut, si nécessaire, réguler la granulométrie des granulés à l'aide de la fréquence de coupe au sein du dispositif de granulation (2).

14. Dispositif selon l'une des revendications 9 à 13, **caractérisé en ce que** le dispositif permet d'ajuster, en fonction des besoins, la température des granulés de manière à ce qu'on puisse obtenir des granulés essentiellement amorphes contenant, lorsqu'ils quittent le réfrigérant, une quantité de chaleur suffisamment faible pour être stockés sans risque, leur température étant de préférence inférieure à 120 °C, avec une préférence particulière inférieure à 80 °C, et, en variante, des granulés contenant, lorsqu'ils quittent le réfrigérant, encore suffisamment de chaleur pour subir une cristallisation par chaleur latente, leur température étant de préférence d'au moins 100 °C, de préférence d'au moins 115 °C, avec une préférence particulière d'au moins 130 °C.

15. Dispositif selon l'une des revendications 9 à 14, **caractérisé en ce que** le dispositif comporte un ou plusieurs conduits destinés à évacuer les granulés, les conduits assurant l'évacuation des granulés, de préférence immédiatement après que ces derniers ont quitté le système de refroidissement (3) ou le système de séchage (7), et débouchant dans le système de stockage (13).
